# EUROPÄISCHE PATENTSCHRIFT

(11) **EP 3 604 131 B1**
(45) Veröffentlichungstag und Bekanntmachung des Hinweises auf die Patenterteilung: **20.03.2024**
(21) Anmeldenummer: 18186540.3
(22) Anmeldetag: 31.07.2018
(51) Int. Cl.: B64C 39/02, G01S 13/87, G08G 5/00

(54) **SYSTEM UND VERFAHREN ZUR ERFASSUNG VON FLUGBEWEGUNGEN**
SYSTEM AND METHOD FOR DETECTING FLIGHT MOVEMENTS
SYSTÈME ET PROCÉDÉ DE DÉTECTION DES MOUVEMENTS DES AÉRONEFS

(43) Veröffentlichungstag der Anmeldung: 05.02.2020
(73) Patentinhaber: HENSOLDT Sensors GmbH, 82024 Taufkirchen (DE)
(72) Erfinder: Brokmeier, Axel, 89233 Neu-Ulm (DE); Kouemou, Guy, 89081 Ulm (DE)
(74) Vertreter: LifeTech IP Spies & Behrndt Patentanwälte PartG mbB

(56) Entgegenhaltungen:
- EP-A1- 1 210 615
- EP-A1- 3 330 732
- EP-A1- 3 352 298
- WO-A1-2018/111360
- DE-A1-102009 008 174
- US-A1- 2017 212 528
- Anonymous: "Maut - Wikipedia", , 27 October 2017 (2017-10-27), XP055781431, Retrieved from the Internet: URL:https://web.archive.org/web/2017102715 0454/https://de.wikipedia.org/wiki/Maut [retrieved on 2021-03-03]

## Beschreibung

Die vorliegende Erfindung bezieht sich auf ein Mautsystem und auf ein Verfahren zur Erfassung von Flugbewegungen eines unbemannten Luftfahrzeugs (Flugkörper) und insbesondere auf ein Mautsystem für Drohnen unter Nutzung der HF-Rückstreutechnologie (sogenannte RF Backscatter Technology).

### Hintergrund

In der Zukunft wird es zu einem massiven Anstieg des Logistikverkehrs in den städtischen Gebieten kommen. Diese Entwicklung stellt eine zentrale Herausforderung mit Blick auf Verkehrsleistungen der Zukunft dar. Um dem Problem eines Verkehrskollapses entgegenzuwirken, kommen andere Transportmittel, wie Fahrradkuriere, Lieferroboter oder unbemannte Drohnen zum Einsatz. Mit einem Maßnahmen- und Verkehrsmix sollen so die Straßen entlastet und gleichzeitig schädliche Umwelteinflüsse wie Abgase und Lärm reduziert werden.

Ab einer bestimmten Entfernung im Bereich von 5 bis 50 Kilometer kann es sinnvoll sein, Drohnen zur Lieferung einzusetzen. Es ist denkbar, Logistik-Plattformen auf Container-Bahnhöfen, Flughäfen oder Häfen zu schaffen, um von dort aus Waren auf verschiedenen Wegen auf Haushalte zu verteilen. Auch der Straßenverkehr kann durch den Einsatz von Drohnen spürbar entlastet werden.

Da vor diesem Hintergrund mit einem deutlich erhöhten Aufkommen an unbemannte Luftfahrzeugen UAVs (Unmanned Aerial Vehicles) zu rechnen ist, besteht Bedarf nach einer strengeren Regulierung dieser UAVs. Für die Luftverkehrsbranche waren und sind die bisherigen Reglementierungen nicht mehr adäquat - zumal professionelle Anwendungen mit großen, schweren Fluggeräten zunehmen.

Hierfür ist es wichtig, Flugbewegungen solcher Luftfahrzeuge zuverlässig zu erfassen. Insbesondere soll sichergestellt werden, dass nur zugelassene Luftfahrzeuge sich in einem Luftraum bewegen können. Deren Flugbewegungen sollen zunehmend entlang bestimmter Flugbahnen gezielt gesteuert und überwacht werden. Außerdem besteht ein Bedarf nach Bewegungserfassungssystemen, die gezielt im Rahmen von Mautsystemen für Drohnen und andere unbemannte Luftfahrzeuge genutzt werden können.

EP3330732A1 offenbart ein Verfahren zur Flugsicherung und/oder Flugleitung von Luftfahrzeugen. Dabei wird von einer Basisstation einer Flugsicherungs- und/oder Flugleitungsanordnung eine Abfragebotschaft ausgesandt, die von einem Transponder in einem Luftfahrzeug empfangen wird. Von dem Transponder werden Antwortbotschaften zurückgesandt und von Basisstationen empfangen. In den empfangenden Basisstationen oder in einer Verarbeitungseinheit der Flugsicherungs- und/oder Flugleitungsanordnung, mit der die aussendende Basisstation und die empfangenden Basisstationen in Verbindung stehen, wird eine Position des Luftfahrzeugs ermittelt.

EP3352298 A1 offenbart ein Backscatter-Transponder der insbesondere in der Luftfahrt eine Vielzahl von Aufgaben unterstützen kann.

EP1210615 B1 offenbart ein System zur Bestimmung der Position eines Transponders, der sich entlang eines Kurses bewegt,

### Zusammenfassung

Zumindest ein Teil der oben genannten Probleme wird durch ein Mautsystem nach Anspruch 1 und ein Verfahren nach Anspruch 6 gelöst. Die abhängigen Ansprüche beziehen sich auf weitere vorteilhafte Ausführungsformen des Mautsystems nach Anspruch.

Optional sind die zumindest zwei Erfassungsmodule ausgebildet, um zumindest eine der folgenden Informationen in Bezug auf das unbemannte Luftfahrzeug abzufragen und an das Steuermodul zu übermitteln:
- eine Identifizierungsinformation,
- eine Flughöhe,
- eine Position,
- eine Geschwindigkeit,
- ein Zielpunkt,
- einen Startpunkt,
- eine Fracht,
- eine Flugrichtung.

Das Identifizieren kann daher durch ein gezieltes Übermitteln einer Information (z. B. einer Nummer oder eines Schlüssels o.ä. Daten) erfolgen. Es ist jedoch auch möglich, dass aus dem Fehlen der Identifizierungsinformation geschlossen wird, dass dies eine unzulässige Flugbewegung bzw. ein nicht zugelassenes Luftfahrzeug ist.

Die zumindest zwei Erfassungsmodule können eine Vielzahl von Erfassungsmodulen sein, wobei die Anzahl beliebig sein kann. Das Mautsystem kann dann optional eine Datenverbindung zwischen dem zumindest einen Steuermodul und der Vielzahl der Erfassungsmodule aufweisen, wobei das zumindest eine Steuermodul ausgebildet ist, um die Flugbewegung des unbemannten Luftfahrzeugs basierend auf den Übermittlungen von Daten von der Vielzahl der Erfassungsmodule zu bestimmen. In dieser Ausführungsform ist keine Übergabe erforderlich, da das Steuermodul die Daten zu den verschiedenen Erfassungen durch die verschiedenen Erfassungsmodule erhält und daraus die Flugbahn bestimmen kann.

Optional weist der Transponder einen HF-Rückstreutransponder (engl. RF back scatter transponder) und die zumindest zwei Erfassungsmodule jeweils eine FMCW-Radareinheit (Interrogator) auf, wobei die FMCW-Radareinheiten eine Abfrage durch ein frequenzmoduliertes Dauerstrichsignal (FMCW) durchführen.

Optional sind die FMCW-Radareinheiten ausgebildet, um den Transponder des unbemannten Luftfahrzeugs auf eine Entfernung von mindestens 100 m abzufragen.

Die vorliegende Erfindung bezieht sich auch auf ein Verfahren zum Erfassen einer Flugbewegung eines unbemannten Luftfahrzeugs, wie in Anspruch 6 offenbart,

### Kurzbeschreibung der Figuren

Die Ausführungsbeispiele der vorliegenden Erfindung werden besser verstanden von der folgenden detaillierten Beschreibung und den beiliegenden Zeichnungen, die jedoch nicht so verstanden werden sollten, dass sie die Offenbarung auf die spezifischen Ausführungsformen einschränken, sondern lediglich der Erklärung und dem Verständnis dienen.
- Fig. 1: zeigt ein System zur Erfassung von Flugbewegungen von unbemannten Luftfahrzeugen in einem nicht erfindungsgemäßen Beispiel.
- Fig. 2: zeigt ein Ausführungsbeispiel für einen Transponder an dem unbemannten Luftfahrzeug.
- Fig. 3: veranschaulicht weitere Details zu der Rückstreumethode, die gemäß Ausführungsbeispielen bei der Abfrage der Luftfahrzeuge zum Einsatz kommt.
- Fig. 4: zeigt ein Flussdiagramm für ein Verfahren zum Erfassen einer Flugbewegung nach einem nicht erfindungsgemäßen Beispiel.

### Detaillierte Beschreibung

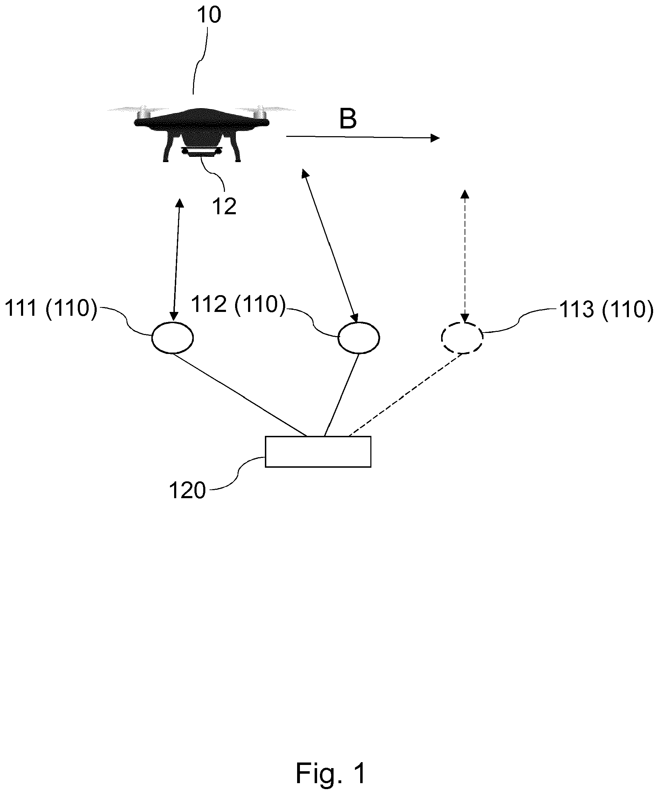

**Fig. 1** zeigt ein nicht erfindungsgemäßes Beispiel, für ein System, das geeignet ist, um eine Flugbewegung B eines unbemannten Luftfahrzeugs 10 (z.B. eine Drohne) mit einem Transponder 12 zu erfassen. Das System umfasst zumindest zwei Erfassungsmodule 111, 112 zum Erfassen des unbemannten Luftfahrzeugs 10 durch eine Abfrage des Transponders 12. Das System umfasst außerdem zumindest ein Steuermodul 120 zum Auslösen der Abfrage des Transponders 12 und zum Auswerten von übermittelten Daten von dem Transponder 12.

Das Auswerten umfasst ein Bestimmen einer Flugbewegung B und ein Identifizieren des unbemannten Luftfahrzeugs 10. Die Flugbewegung B kann beispielsweise dadurch erfasst werden, dass das unbemannte Luftfahrzeug 10 nacheinander mehrere Erfassungsmodule 110 (111, 112, 113, ...) passiert. Es ist nur beispielhaft ein drittes Erfassungsmodul gezeigt. Die Anzahl und auch deren Platzierung können beliebig sein. Da sich das unbemannte Luftfahrzeug identifiziert, ist es allein aus dem Fakt, dass das Luftfahrzeug 10 mehrere unterschiedliche Erfassungsmodule 110 passiert hat bzw. dort erfasst wurde, möglich, seine Flugbahn zu rekonstruieren. Wenn beispielsweise in einem Gebiet eine Vielzahl von Erfassungsmodulen 110 an verschiedenen Orten vorhanden ist, kann die Flugbahn B in dem Gebiet allein durch das Erfassen rekonstruiert werden.

Durch eine geeignete Transpondertechnologie kann das Abfragen der Erfassungsmodule 110 bis auf eine Reichweite von einigen 100 m erfolgen. Die einzelnen Erfassungsmodule 110 können voneinander natürlich einen größeren Abstand als diese Reichweite haben. Beispielsweise können sie innerhalb des Gebietes verteilt werden oder gezielt entlang vorbestimmter Flugrouten (die überwacht werden sollen) angeordnet werden, um durch das Erfassen des Luftfahrzeugs 10 die Flugbewegung B rekonstruieren zu können. Es versteht sich, dass das Luftfahrzeug 10 nicht alle Erfassungsmodule 110 passieren muss, sondern dass für das Bestimmen der Flugbewegung B zumindest zwei erfasste Punkte ausreichen, zumindest solange der Flug geradlinig erfolgt.

Ausführungsbeispiele ermöglichen auf diese Weise, die Überwachung von vorgeschriebenen Flugrouten für die unbemannten Luftfahrzeuge 10. Hierdurch wird gleichzeitig ein Mautsystem ermöglicht, das zur Gebührenerfassung entsprechend der Flugroute oder deren Länge genutzt werden kann. Ebenso ist es möglich, nichtautorisierte Flugbewegungen in dem Gebiet festzustellen. Hierzu können beispielsweise einfache Reflexionen der Abfragesignale (z.B. Radarsignale) von den Flugobjekten dienen (z. B. wenn sie sich nicht oder nicht korrekt identifizieren).

Gemäß einem weiteren nicht beanspruchten Beispiel ist es möglich, lediglich eine Steuereinheit 120 auszubilden, die mit den einzelnen Erfassungsmodulen 110 in Kontakt steht. Wenn ein Luftfahrzeug 10 durch eines der Erfassungsmodule 110 erfasst wurde, kann eine entsprechende Information über die Identifizierung des Luftfahrzeugs 10 an das Steuermodul 120 weitergegeben werden. Wenn das Luftfahrzeug 10 sich weiterbewegt und durch das nächste Erfassungsmodul 110 erfasst wird, kann auch dieses diese Information an das Steuermodul 120 weitergeben. So erhält das Steuermodul 120 nacheinander entsprechende Informationen von den einzelnen Erfassungsmodulen 110, die das Luftfahrzeug 10 erfasst haben. Außerdem erhalten Sie die Identifizierungsinformation des Luftfahrzeugs 10, sodass die Flugbahn B des Luftfahrzeugs 10 rekonstruiert werden kann.

Jedes Erfassungsmodul 110 umfasst eine zugehörige Steuereinheit 120, die beispielsweise in einer Abfrageeinheit (Interrogator) untergebracht sind. Gemäß diesem Ausführungsbeispiel erfasst das Erfassungsmodul 110 das Luftfahrzeug 10 mit der jeweiligen Identifizierung und gibt diese Information an das zugehörige Steuermodul 120 weiter. Die Steuermodule 120 der einzelnen Abfrageeinheiten können untereinander in Kontakt stehen, sodass sie die Information über ein erfasstes Luftfahrzeug 10 weitergeben. Auf diese Weise ist es möglich, dass das Luftfahrzeug 10 von einer Abfrageeinheit zur nächsten Abfrageeinheit übergeben wird. Wenn zum Beispiel das Luftfahrzeug 10 das Erfassungsgebiet einer jeweiligen Abfrageeinheit verlässt, können benachbarte Abfrageeinheiten darüber informiert werden. Optional ist es ebenfalls möglich, dass ein Servermodul vorgesehen ist, welches schließlich alle Informationen über Flugbewegungen B von Luftfahrzeugen 10 erhält. Auf diese Weise kann festgestellt werden, ob das Luftfahrzeug 10 sich entlang zulässiger Flugbahnen bewegt hat und ob es die nötige Zulassung für die Flugbewegung aufweist.

Gemäß weiterer Ausführungsbeispiele wird von dem Luftfahrzeug 10 nicht nur die Identifizierungsinformation übertragen. Es können eine Reihe von weiteren Informationen abgefragt werden, die durch den Transponder 12 des Luftfahrzeugs 10 bereitgestellt werden. Dazu gehören insbesondere eine oder mehrere der folgenden Informationen:
- eine Identifizierungsinformation,
- eine Höhe des unbemannten Luftfahrzeugs,
- eine Position des ungenannten Luftfahrzeugs,
- eine Geschwindigkeit,
- ein Zielpunkt,
- eine Fracht,
- eine Gebietszugehörigkeitsinformation (z.B. in Bezug auf ein Land, Kreis, Stadt etc.),
- einen Startpunkt,
- eine Flugrichtung.

Um diese Informationen übertragen zu können, wird gemäß Ausführungsbeispielen in dem Transponder 12 beispielsweise die RF-Backscatter-Technologie (HF-Rückstreutechnologie) eingesetzt, wobei der Transponder 12 beispielsweise in eine Plakette zur Identifizierung integriert sein kann. Die Plakette kann beispielsweise gleichzeitig eine visuelle Identifizierung ermöglichen (z.B. durch ein aufgedrucktes gültiges Identifizierungskennzeichen). Die RF Backscatter Transponder funktionieren nach dem Prinzip der Informationsübertragung durch modulierte Reflexion. Dabei umfassen die Erfassungsmodule 110 ein Abfragesystem (Interrogator) am Boden, das eine Sende- und eine Empfangseinheit aufweist, die ein Sendesignal mit einer geringen Sendeleistung auf einen Backscatter-Transponder 12 an dem Luftfahrzeug strahlen. Dort wird das Signal moduliert und zum Empfänger reflektiert bzw. das modulierte Signal wird zurückgesandt, um so die beispielhafte Drohne über eine Fernabfrage zu identifizieren. Dies ist über eine Luftschnittstelle bis über 100 Meter Entfernung von einer Bodeneinheit möglich.

Es versteht sich, dass die Backscatter-Technologie nur ein Beispiel ist, das im Rahmen der vorliegenden Erfindung genutzt werden kann. Die Erfindung soll jedoch nicht darauf eingeschränkt werden.

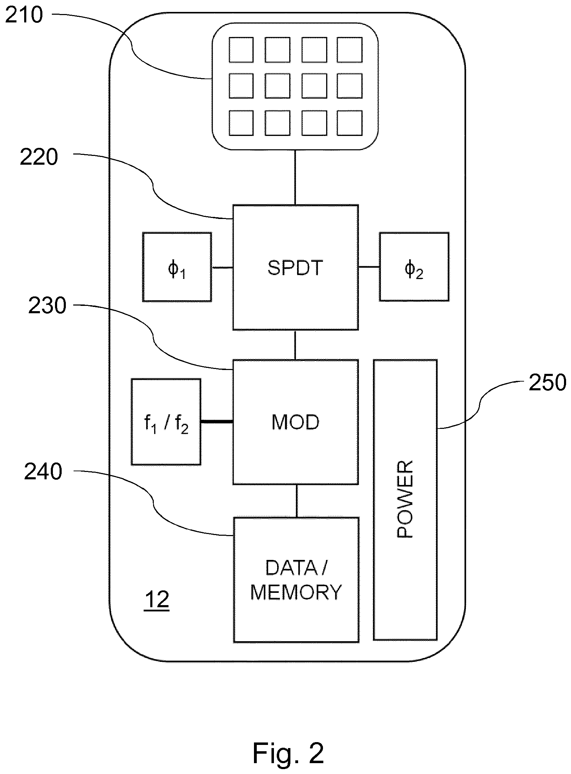

**Fig. 2** zeigt ein Ausführungsbeispiel für den Backscatter-Transponder 12, der an dem unbemannten Luftfahrzeugs 10 angebracht ist und mit dem System aus der Fig. 1 zusammenarbeitet. Der Transponder 12 umfasst eine Antennenanordnung 210, einen Umschalter 220 (SPDT), einem Modulator 230, einen Datenspeicher 240 und eine Spannungsversorgung 250. Der Umschalter 220 koppelt an die Antennenanlage 210 und ändert auf ein Schaltsignal die Impedanz der Antennenanordnung 210 durch ein periodisches Umschalten zwischen zumindest zwei Impedanzen Z₁ und Z₂, die zu verschiedenen Phasenverschiebungen φ₁, φ₂ führen. Der Modulator 230 schaltet zwischen zwei Frequenzen f₁ und f₂ für die Modulation um und der Datenspeicher kann eine oder mehr Informationen (Datenwörter) enthalten. Durch den beispielsweise am Fußpunkt der Antennenanordnung 210 angebrachten Umschalter 220 können durch das Schalten auf die zwei verschiedenen Impedanzen (Z₁ und Z₂) zwei unterschiedliche Reflexionszustände erzielt werden. Durch periodisches Umschalten des SPDTs 220 zwischen den beiden Impedanzen entsteht ein periodisches Spektrum.

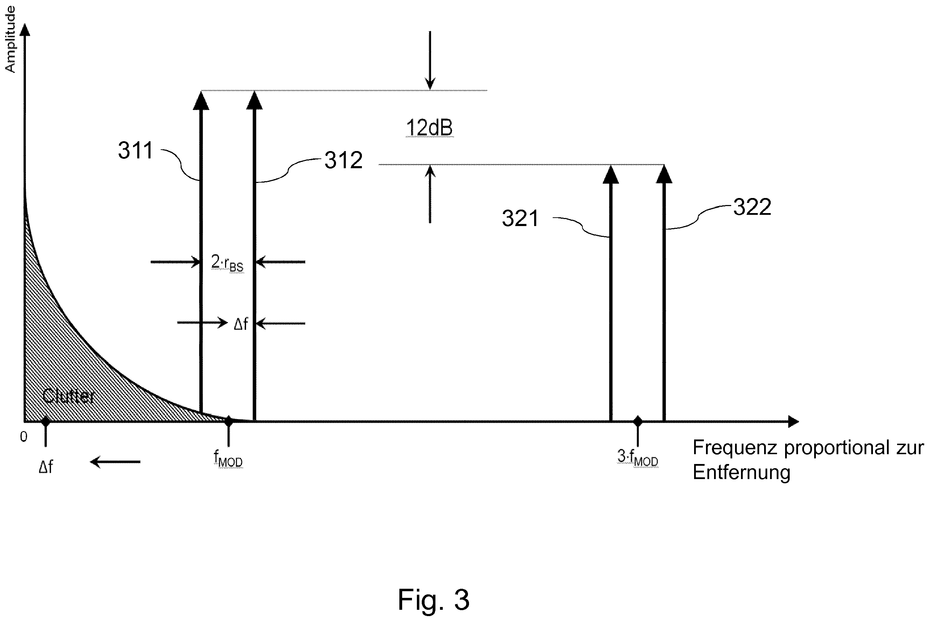

**Fig. 3** zeigt beispielhaft das empfangene Signal durch den Empfänger (d.h. das Erfassungsmodul 110). Diese Frequenzantwort entsteht durch die HF Rückstreutechnologie unter Nutzung einer frequenzmodulierten Dauerstrich-Radaranlage (FMCW-Radaranlage) in dem Erfassungsmodul 110. Der Sender strahlt dabei ein kontinuierliches Sendesignal ab, welches jedoch keine feste Frequenz aufweist. Die Frequenz ändert sich beispielsweise periodisch mit der Zeit (z. B. in Form eines Sägezahnmusters mit aufeinanderfolgenden Rampen). Wenn ein solches Sendesignal ausgesandt und durch den Transponder 12 beantwortet bzw. reflektiert wird, hat das Empfangssignal zu dem späteren Zeitpunkt eine andere Frequenz als das dann ausgesandte Sendesignal. Aus der Frequenzverschiebung der beiden Signale kann auf die Entfernung zu dem Transponder 12 geschlossen werden. Wenn beide Signale gemischt werden, kann durch einen Tiefpassfilter gezielt die Differenzfrequenz ermittelt und daraus die Entfernung zu dem Sender ermittelt werden. Eine mögliche Verzögerung zwischen dem Empfang des Sendesignals und des Aussendens der Reflexionssignale durch den Transponder 12 kann dabei vernachlässigt werden oder kann als bekannt berücksichtigt werden.

Die zusätzliche Information, wie zum Beispiel die Identifizierung oder weitere Informationen über das Luftfahrzeug 10, werden durch die Modulation des Rücksendesignals übertragen. Wie gesagt kann dazu die Antenne des Transponders 12 zwischen verschiedenen Impedanzen geschaltet werden. Im einfachsten Fall kann die effektive Länge der Antenne variiert werden, wobei die Längenänderung in der Größenordnung der Wellenlänge des Sendesignals liegt. Wenn der Transponder 12 zwischen den zwei Schaltzuständen mit einer Modulationsfrequenz (z.B. f₁ bzw. f₂) schaltet, ergeben sich die zwei Signallinien 311, 312, die um die Modulationsfrequenz herum liegen und die durch den Empfänger 110 detektiert werden können. Die Entfernung zu dem Zielobjekt (in diesem Fall ist das Ziel der Backscatter Transponder 12) ist proportional der Frequenz Δf (infolge der Rampe in dem Frequenzsignal), die wiederum dem halben Abstand der Signallinien 311, 312 entspricht (die Modulation liefert nämlich wegen der Frequenzmischung Signallinien mit einer Frequenz von f_{mod} ± Δf). Außerdem treten weitere Signalpaare 321, 322 bei Vielfachen der Modulationsfrequenz des Transponders 12 auf. Die Amplituden dieser höheren Moden sind gedämpft (z.B. um 12 dB). Wichtig für die Anwendung ist, dass der Frequenzabstand der Spektrallinien311, 312, die symmetrisch um die Modulationsfrequenz f_{mod} liegen, der doppelten Zielentfernung proportional ist. Hieraus kann nämlich der Abstand zu dem Luftfahrzeug 10 ermittelt werden.

Aufgrund dieser Frequenzantwort von einem Backscatter Transponder 12 können Informationen durch den Empfänger (Erfassungsmodule 110) leicht detektiert werden. Da das reflektierte Signal ein sehr breites Spektrum hat und einzelne Signallinien 311, 312 deutlich aus dem Hintergrund-Clutter heraustreten, können sie durch einen Filter leicht separiert werden. Durch eine Änderung der Modulationsfrequenzen (zwischen f1 und f2), werden die Linie 311, 312 und 321, 322 verschoben und erscheint nicht mehr in einem entsprechenden Filter (z.B. ein Bandpassfilter). Daher kann durch ein Takten zwischen den Modulationsfrequenzen f1 und f2 entsprechend einem Datenwort im Datenspeicher Informationen übertragen werden. Die Demodulation des Wortes stellt sich als sehr einfach dar, da das Takten mit der Modulationsfrequenz zu Verschiebungen der Signallinien 311, 312 führt. Eine binäre "1" der BitFolge des Datenworts aus dem Speicher kann beispielsweise so definiert sein, dass die Signallinien im Filter liegen (die Signallinien 311, 312 werden detektiert), während eine binäre "o" außerhalb des Filters liegt.

Dieses Takten wird von dem Modulator 230 bewirkt, der den Umschalter 220 periodisch zwischen den beiden Impedanzen schaltet, und zwar mit einer Taktfrequenz f1 oder f2. Der Datenspeicher 240 ist ausgebildet, um darin beispielsweise Identifikationsdaten des unbemannten Luftfahrzeugs 10 und andere Daten zu dem Luftfahrzeug 10 zu speichern. Diese Daten können dann über die Modulation des Modulator 230 auf ein Abfragesignal durch die Erfassungsmodule 110 auf das reflektierte Signal aufmoduliert werden, um somit diese Informationen dem Erfassungsmodul bereitzustellen.

Ein Vorteil des beschriebenen Transponders 12 (RF Backscatter IDs) ist, dass er keine eigene Strahlungsquelle braucht (passives System), sondern nur das Signal des Abfragesystems (Erfassungsmodul 110) moduliert und somit eine gewünschte Information überträgt. Mit Hilfe eines derartigen Abfragesystems kann ein Maut-System etabliert und darüber hinaus zugleich der Drohnenverkehr intelligent gelenkt werden.

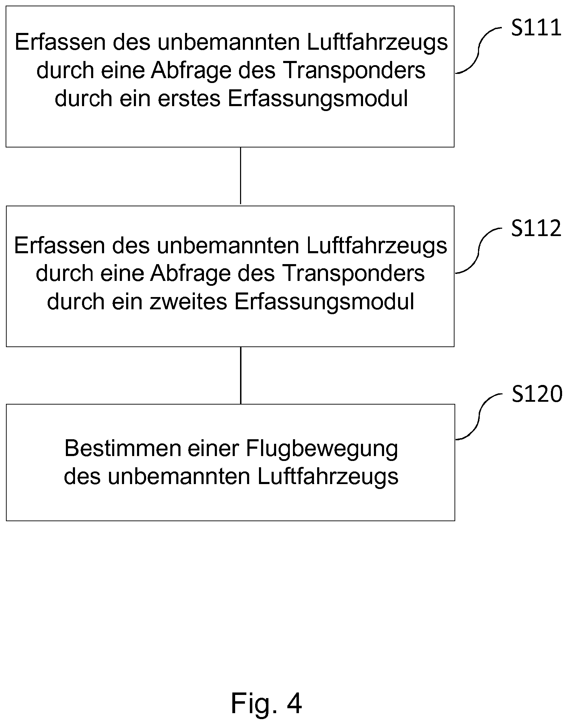

**Fig. 4** zeigt ein Flussdiagramm für ein Verfahren zum Erfassen einer Flugbewegung B eines unbemannten Luftfahrzeugs 10, der einen Transponder 12 aufweist, nach einem weiteren nicht beanspruchten Beispiel. Das Verfahren umfasst:
- Erfassen S111 des unbemannten Luftfahrzeugs 10 durch eine Abfrage des Transponders 12 durch ein erstes Erfassungsmodul 111;
- Erfassen S112 des unbemannten Luftfahrzeugs 10 durch eine Abfrage des Transponders 12 durch ein zweites Erfassungsmodul 112; und
- Bestimmen S120 einer Flugbewegung B des unbemannten Luftfahrzeugs 10.

Das Verfahren kann zumindest teilweise Computer-implementiert sein, d.h. es kann zumindest teilweise (z. B. die entsprechenden Steuerfunktionen) durch Anweisungen umgesetzt sein, die auf einem Speichermedium gespeichert sind und in der Lage sind, die Schritte des Verfahrens auszuführen oder zu veranlassen, wenn es auf einem Prozessor läuft. Die Anweisungen umfassen typischerweise eine oder mehrere Anweisungen, die auf unterschiedlicher Art auf unterschiedlichen Medien in oder peripher zu einer Steuereinheit (mit einem Prozessor) gespeichert sein können, die, wenn sie gelesen und durch die Steuereinheit ausgeführt werden, die Steuereinheit dazu veranlassen, Funktionen, Funktionalitäten und Operationen auszuführen, die zum Ausführen eines Verfahrens gemäß der vorliegenden Erfindung notwendig sind. So können das Erfassungsmodul und die Steuermodule in Form von Software umgesetzt sein, die beispielsweise mit entsprechenden Antennenanlagen kommunizieren, um die beschriebenen Funktionen umzusetzen.

Ausführungsbeispiele der vorliegenden Erfindung bieten insbesondere die folgenden Vorteile:
- Die Registrierung von Drohnen in Datenbanken kann mit dem System kombiniert und somit überprüft werden (ob nur zugelassene Drohnen betrieben werden).
- Vorschriften und Techniken zum Drohnen-Flugmanagement (z.B. Einhaltung vorgeschriebener Flughöhen, Flugkorridoren etc.) können überprüft werden.
- Eine Kennzeichnungspflicht für Drohnen kann überwacht werden.
- Ein Maut-System kann implementiert werden, auch zum Begleichen der erhöhten Kosten. Ein solches Mautsystem kann auch zum Regulieren und Steuern (Lenkung in bestimmt Gebiete) des Verkehrsaufkommens genutzt werden.
- RF Backscatter Transponder sind sehr kostengünstig und können ohne großen mechanischen und technologischen Aufwand an Drohnen angebracht werden.
- Die Modalitäten der Maut-Abrechnung (zentrale Abrechnung, Prepaid usw.) sind davon unabhängig und können nach Bedarf gestaltet werden.

Die in der Beschreibung, den Ansprüchen und den Figuren offenbarten Merkmale der Erfindung können sowohl einzeln als auch in beliebiger Kombination für die Verwirklichung der Erfindung wesentlich sein, wenn sie in den Anwendungsbereich der beigefügten Ansprüche fallen.

### Bezugszeichenliste

- 10: unbemanntes Luftfahrzeugs,
- 12: Transponder (z.B. FMCW Transponder)
- 110, 111, 112, ...: Erfassungsmodule
- 120: Steuermodul(e)
- 130: Servermodul
- 210: Antennenanordnung
- 220: Umschalter (SPDT)
- 230: Modulator
- 240: Datenspeicher
- 250: Spannungsversorgung
- B: Flugbewegungen des unbemannten Flugkörpers
- f1, f2: Modulationsfrequenzen
- Z1, Z2: schaltbare Impedanzen
- 311,312: erstes Signalpaar
- 321,322: zweites Signalpaar

## Patentansprüche

1. Mautsystem für unbemannte Luftfahrzeuge (10), wobei das Mautsystem Folgendes umfasst:
einen Transponder (12), ausgelegt zur Anwendung in einem unbemannten Luftfahrzeug (10),
zumindest zwei Erfassungsmodule (111, 112) zum Erfassen des unbemannten Luftfahrzeugs (10) entlang der Flugbewegung (B) durch eine Abfrage des Transponders (12),
wobei das Mautsystem zu jedem Erfassungsmodul (111, 112) ein zugehöriges Steuermodul (120) umfasst, wobei jedes Steuermodul (120) zum Auslösen der Abfrage des Transponders (12) und zum Auswerten von übermittelten Daten von dem Transponder (12) ausgebildet ist,
wobei das Auswerten ein Identifizieren des unbemannten Luftfahrzeugs (10) und ein Ermitteln von dessen Flugbewegung (B) umfasst, wobei das die zugehörigen Steuermodule (120) ausgebildet sind, um das unbemannte Luftfahrzeug (10) zwischen den zumindest zwei Erfassungsmodulen (111,112) zu übergeben, wobei das Übergeben ein Übermitteln an Information umfasst, die zumindest eine Identifizierung des unbemannten Luftfahrzeugs (10) erlauben; und
einem Server, um aus dem nacheinander erfolgenden Erfassen die Flugbewegungen (B) der Luftfahrzeuge (10) zu bestimmen.

2. Mautsystem nach Anspruch 1, wobei die zumindest zwei Erfassungsmodule (111, 112) ausgebildet sind, um zumindest eine der folgenden Informationen zu dem unbemannten Luftfahrzeug (10) abzufragen und an das Steuermodul (120) zu übermitteln:
- eine Identifizierungsinformation,
- eine Flughöhe,
- eine Position,
- eine Geschwindigkeit,
- ein Zielpunkt,
- einen Startpunkt,
- eine Fracht,
- eine Flugrichtung.

3. Mautsystem nach Anspruch 1 oder Anspruch 2, wobei die zumindest zwei Erfassungsmodule (111,112) eine Vielzahl von Erfassungsmodulen (110) sind und das System weiter eine Datenverbindung zwischen den zugehörigen Steuermodulen (120) und jedem Erfassungsmodul (110) aufweist und das jedes Steuermodul (120) ausgebildet ist, um die Flugbewegung (B) des unbemannten Luftfahrzeugs (10) basierend auf den Übermittlungen von Daten von der Vielzahl der Erfassungsmodule (110) zu bestimmen.

4. Mautsystem nach einem der vorhergehenden Ansprüche, wobei der Transponder (12) einen HF-Rückstreutransponder aufweist und die zumindest zwei Erfassungsmodule (110) jeweils eine FMCW-Radareinheit umfassen, die eine Abfrage durch ein frequenzmoduliertes Dauerstrichsignal (FMCW) ermöglicht.

5. Mautsystem nach Anspruch 4, wobei die FMCW-Radareinheiten ausgebildet ist, um den Transponder (12) , wenn er an dem unbemannten Luftfahrzeug (10) angebracht ist, auf eine Entfernung von mindestens 100 m abzufragen.

6. Verfahren zum Erfassen, in einem Mautsystem, einer Flugbewegung (B) eines unbemannten Luftfahrzeugs (10), der einen Transponder (12) aufweist, wobei das Mautsystem mindestens zwei Erfassungsmodule (111, 112) aufweist, wobei jeder Erfassungsmodul (111, 112) ein zugehöriges Steuermodul (120) umfasst,
wobei das Verfahren die folgenden Schritte umfasst: Erfassen (S111) des unbemannten Luftfahrzeugs (10) durch eine Abfrage des Transponders (12) durch ein erstes Erfassungsmodul (111);
Erfassen (S112) des unbemannten Luftfahrzeugs (10) durch eine Abfrage des Transponders (12) durch ein zweites Erfassungsmodul (112);
Übergeben, durch das zugehörigen Steuermodule (120), des unbemannten Luftfahrzeug (10) zwischen den zumindest zwei Erfassungsmodulen (111, 112), wobei das Übergeben ein Übermitteln an Information umfasst, die zumindest eine Identifizierung des unbemannten Luftfahrzeugs (10) erlauben; und
Bestimmen (S120), aus dem nacheinander erfolgenden Erfassen, die Flugbewegung (B) des unbemannten Luftfahrzeugs (10) durch einen Server,

## Claims

1. Toll system for unmanned aerial vehicles (10), wherein the toll system comprises the following: a transponder (12) designed for use in an unmanned aerial vehicle (10),
at least two detection modules (111, 112) for detecting the unmanned aerial vehicle (10) along the flight movement (B) by querying the transponder (12),
wherein the toll system comprises an associated control module (120) for each detection module (111, 112), wherein each control module (120) is designed to trigger the query of the transponder (12) and to evaluate transmitted data from the transponder (12),
wherein the evaluation comprises identifying the unmanned aerial vehicle (10) and determining the flight movement (B) thereof, wherein the associated control modules (120) are designed to transfer the unmanned aerial vehicle (10) between the at least two detection modules (111, 112), wherein the transfer comprises transmitting information that allows at least one identification of the unmanned aerial vehicle (10); and
a server to determine the flight movements (B) of the aerial vehicles (10) from the successive detections.

2. Toll system according to claim 1, wherein the at least two detection modules (111, 112) are designed to query at least one of the following items of information pertaining to the unmanned aerial vehicle (10) and to transmit said information to the control module (120):
- identification information,
- a flight altitude,
- a position,
- a speed,
- a destination point,
- a starting point,
- a cargo,
- a flight direction.

3. Toll system according to claim 1 or claim 2, wherein the at least two detection modules (111, 112) are a plurality of detection modules (110), and the system further has a data connection between the associated control modules (120) and each detection module (110), and each control module (120) is designed to determine the flight movement (B) of the unmanned aerial vehicle (10) based on the transmissions of data from the plurality of detection modules (110).

4. Toll system according to any of the preceding claims, wherein the transponder (12) has an RF back scatter transponder, and the at least two detection modules (110) each comprise an FMCW radar unit which enables a query by means of a frequency-modulated continuous wave signal (FMCW).

5. Toll system according to claim 4, wherein the FMCW radar units are designed to query the transponder (12), when attached to the unmanned aerial vehicle (10), at a distance of at least 100 m.

6. Method for detecting, in a toll system, a flight movement (B) of an unmanned aerial vehicle (10) having a transponder (12), wherein the toll system has at least two detection modules (111, 112), wherein each detection module (111, 112) comprises an associated control module (120),
wherein the method comprises the following steps:
detecting (S111) the unmanned aerial vehicle (10) by querying the transponder (12) by means of a first detection module (111);
detecting (S112) the unmanned aerial vehicle (10) by querying the transponder (12) by means of a second detection module (112);
transferring the unmanned aerial vehicle (10), by means of the associated control module (120), between the at least two detection modules (111, 112),
wherein the transfer comprises transmitting information that allows at least one identification of the unmanned aerial vehicle (10); and
determining (S120) the flight movement (B) of the unmanned aerial vehicle from the successive detections (10) by means of a server.

## Revendications

1. Système de péage pour aéronefs sans équipage (10), le système de péage comprenant les éléments suivants : un transpondeur (12), configuré pour être utilisé dans un aéronef sans équipage (10),
au moins deux modules de détection (111, 112) permettant de détecter l'aéronef sans équipage (10) le long du mouvement de vol (B) par une interrogation du transpondeur (12),
le système de péage comprenant, pour chaque module de détection (111, 112), un module de commande (120) associé, chaque module de commande (120) étant configuré pour déclencher l'interrogation du transpondeur (12) et pour évaluer des données communiquées par le transpondeur (12),
l'évaluation comprenant une identification de l'aéronef sans équipage (10) et une détermination de son mouvement de vol (B), les modules de commande (120) associés étant configurés pour transmettre l'aéronef sans équipage (10) entre les aux moins deux modules de détection (111, 112), la transmission comprenant une communication d'informations qui permettent au moins une identification de l'aéronef sans équipage (10) ; et
un serveur pour déterminer les mouvements de vol (B) des aéronefs (10) à partir des détections successives.

2. Système de péage selon la revendication 1, les au moins deux modules de détection (111, 112) étant configurés pour interroger au moins l'une des informations suivantes concernant l'aéronef sans équipage (10) et pour la communiquer au module de commande (120) :
- une information d'identification,
- une altitude de vol,
- une position,
- une vitesse,
- un point d'arrivée,
- un point de départ,
- une cargaison,
- une direction de vol.

3. Système de péage selon la revendication 1 ou la revendication 2, les au moins deux modules de détection (111, 112) étant une pluralité de modules de détection (110) et le système présentant en outre une connexion de données entre les modules de commande (120) associés et chaque module de détection (110) et chaque module de commande (120) étant configuré pour déterminer le mouvement de vol (B) de l'aéronef sans équipage (10) sur la base des communications de données de la pluralité de modules de détection (110).

4. Système de péage selon l'une des revendications précédentes, le transpondeur (12) présentant un transpondeur à rétrodiffusion HF et les au moins deux modules de détection (110) comprenant respectivement une unité radar FMCW qui permet une interrogation par un signal à onde continue modulée en fréquence (FMCW).

5. Système de péage selon la revendication 4, l'unité radar FMCW étant configurée pour interroger le transpondeur (12), lorsqu'il est monté sur l'aéronef sans équipage (10), à une distance d'au moins 100 m.

6. Procédé permettant de détecter, dans un système de péage, un mouvement de vol (B) d'un aéronef sans équipage (10) qui présente un transpondeur (12), le système de péage présentant au moins deux modules de détection (111, 112), chaque module de détection (111, 112) comprenant un module de commande (120) associé,
le procédé comprenant les étapes suivantes :
détection (S111) de l'aéronef sans équipage (10) par une interrogation du transpondeur (12) par un premier module de détection (111) ;
détection (S112) de l'aéronef sans équipage (10) par une interrogation du transpondeur (12) par un second module de détection (112) ;
transmission, par le module de commande (120) associé, de l'aéronef sans équipage (10) entre les aux moins deux modules de détection (111, 112), la transmission comprenant une communication d'informations qui permettent au moins une identification de l'aéronef sans équipage (10) ; et
détermination (S120), à partir des détections successives, du mouvement de vol (B) de l'aéronef sans équipage (10) par un serveur.
